# EUROPÄISCHE PATENTSCHRIFT

(11) **EP 0 556 457 B1**
(45) Veröffentlichungstag und Bekanntmachung des Hinweises auf die Patenterteilung: **13.03.1996**
(21) Anmeldenummer: 92120013.5
(22) Anmeldetag: 25.11.1992
(51) Int. Cl.: A01B 3/46

(54) **Aufsattel- oder Anhänge-Drehpflug**
Hitchable or trailable reversible plough
Charrue réversible attelable ou accrochable

(30) Priorität: 21.02.1992 DE 9202297 U
(43) Veröffentlichungstag der Anmeldung: 25.08.1993
(73) Patentinhaber: Rabewerk GmbH + Co., D-49152 Bad Essen (DE)
(72) Erfinder: Albers, Heinrich, Dipl.-Ing., W-4515 Bad Essen (DE); Becker, Ignaz, Dipl.-Ing., W-4994 Pr. Oldendorf (DE); Reker, Stefan, Dipl.-Ing., W-4508 Bohmte (DE)
(74) Vertreter: Missling, Arne, Dipl.-Ing.

(56) Entgegenhaltungen:
- DE-A- 3 438 787
- FR-A- 2 664 124
- US-A- 4 266 618

## Beschreibung

Die Erfindung bezieht sich auf einen Aufsattel- oder Anhänge-Drehpflug mit einem vorderen und einem hinteren, durch ein horizontales Gelenk verbundenen Pflugrahmen, mit einer mindestens ein Rad umfassenden Abstützvorrichtung, welche in der hinteren Hälfte des Drehpfluges angeordnet ist, und einer Tiefen-Führungseinrichtung für den hinteren Pflugrahmen.

Im speziellen betrifft die Erfindung lange Aufsattel- bzw. Anhänge-Drehpflüge, welche einen Karren oder ein Hinterrad aufweisen, welches von einem Stabilisator gehalten und in der hinteren Hälfte der Pfluglänge angeordnet ist. Um eine Bodenanpassung eines langen Pfluges zu ermöglichen und um Änderungen der Arbeitstiefe des letzten Pflugkörpers zu vermeiden, ist es, beispielsweise aus der EP-B1-297 969 bekannt, im Bereich der Abstützung des Pfluges durch das Hinterrad ein Gelenk einzufügen und am hinteren Pflugende ein Tiefen-Führungsrad anzubringen. Der vordere Pflugteil wird somit an seinem vorderen Ende vom Schlepper und an seinem hinteren Ende von dem Karren oder Hinterrad geführt, während der hintere Pflugteil an seinem vorderen Ende von dem Karren oder Hinterrad und an seinem hinteren Ende von dem Tiefen-Führungsrad oder auch von Schleifsohlen der Pflugkörper abgestützt ist. Es ist somit möglich, die letzte Furche, welche gleichzeitig die Führung für die Schlepperräder während des nächsten Bearbeitungsganges bildet, mit einer konstanteren Tiefe auszubilden. Ähnliche Lösungen sind aus DE-OS 22 48 186 aus dem deutschen Gebrauchsmuster 72 02 127 und der FR-A-2 201 022 bekannt. Diese Lösungen betreffen Beetpflüge.

Das Problem besteht hinsichtlich der Anordnung und Ausgestaltung des Gelenkes insbesondere darin, daß bei den Beetpflügen das Gelenk eine gewisse Höhe aufweisen muß, um zu verhindern, daS unter dem Gelenk Verstopfungen durch Strohknäule oder ähnliches vorkommen. Wenn jedoch das Gelenk zu hoch ist, ergibt sich für die an den Pflugkörpern angreifenden Kräfte bzw. deren Resultierende ein großer Hebelarm, welcher zum Anheben des hinteren Bereiches des Pfluges führt. Man hat deshalb versucht, durch Federn ein Gegenmoment aufzubringen, siehe DE-OS 22 48 186 und DE-Gbm 72 02 127. Bei der Lösung gemäß der EP-B1-297 969 sowie bei dem aus der EP-A1-318 391 bekannten Pflug ergibt sich jedoch in der normalen Lage des vorderen und hinteren Pflugrahmens kein ausreichendes Moment, so daß bei schweren Böden der hintere Pflugrahmen angehoben werden wird. Aus der EP-B1-297 969 ist es bekannt, das Gelenk zu verriegeln, wenn der Pflug im Vorgewende fährt. Während des Pflügens ist eine derartige Verriegelung jedoch nicht möglich, da dann die Wirkung des Gelenkes aufgehoben wurde. Bei dem aus der EP-A1-318 391 bekannten Pflug können die federnden Elemente nur dann wirksam werden, wenn der hintere Pflugrahmen bereits aus der fluchtenden, das heißt der normalen Lage heraus bewegt ist. Dies bedeutet, daß in der normalen Mittellage, in welcher eine Vorspannung aufgebracht werden müßte, Kraftfreiheit herrscht.

Der Erfindung liegt die Aufgabe zugrunde, einen Drehpflug der eingangs genannten Art zu schaffen, welcher bei einfachem Aufbau und einfacher, betriebssicherer Anwendbarkeit auch bei unebenem Boden eine konstante Tiefen-Führung des hinteren Pflugrahmens gewahrleistet.

Erfindungsgemäß wird die Aufgabe dadurch gelöst, daß das Gelenk als ideelles Doppelgelenk ausgebildet ist, wobei durch eine Gelenkanordnung in der jeweiligen Arbeitsstellung des Drehpfluges ein unterhalb der Symmetrieebene des Pflugrahmens angeordneter Pol gebildet wird.

Der erfindungsgemäße Drehpflug zeichnet sich durch eine Reihe erheblicher Vorteile aus. Da erfindungsgemäß die Verschwenkung um ein ideelles Gelenk erfolgt, ist es möglich, eine ausreichende Bodenfreiheit vorzusehen, so daS Verstopfungen oder Beschädigungen durch Pflanzenreste oder Bodenbestandteile auszuschließen sind. Weiterhin kann, wie sich aus der Beschreibungseinleitung ergibt, der aus dem Stand der Technik bekannte Nachteil bei der körperlichen Ausgestaltung und Anordnung von Elementen vermieden werden. Der Drehpflug ist somit sowohl einfach auszubilden, als auch einfach und betriebssicher zu bedienen. Durch die erfindungsgemäß vorgesehene Lage des Gelenkes ist gewährleistet, daß die Pflugscharen des hinteren Pflugrahmens stets in eine ausreichende Tiefe des Erdreiches geführt werden, auch wenn der mittlere Bereich des Drehpfluges beim Überfahren von Bodenunebenheiten angehoben wird.

Erfindungsgemäß kann es günstig sein, wenn die Gelenkanordnung so ausgebildet ist, daß sie zumindest in einer Zwibeim Drehen des Pfluges symmetrisch zum Pflugrahmen ist und in der jeweiligen Arbeitsstellung zum Ausbilden des ideellen Gelenkes verschwenkt und in dieser Stellung fixiert werden kann.

Das ideelle Doppelgelenk kann erfindungsgemäß mittels eines Lenkergetriebes oder mittels einer Kulissenführung ausgebildet sein. Es sind auch beliebige andere Ausgestaltungsformen möglich.

Weitere vorteilhafte Weiterbildungen der Erfindung ergeben sich aus den Unteransprüchen.

Nachfolgend wird die Erfindung anhand von Ausführungsbeispielen in Verbindung mit der Zeichnung beschrieben. Dabei zeigt:
- Fig. 1: eine Draufsicht auf einen erfindungsgemäßen Drehpflug,
- Fig. 2: eine Teil-Seitenansicht des hinteren Pflugrahmenbereiches zur Erläuterung der Kraftangriffspunkte,
- Fig. 3: eine Seitenansicht eines ersten Ausführungsbeispieles des erfindungsgemäßen Gelenkbereiches, und
- Fig. 4: eine Seitenansicht eines weiteren Ausführungsbeispieles des erfindungsgemäßen Gelenkbereiches.

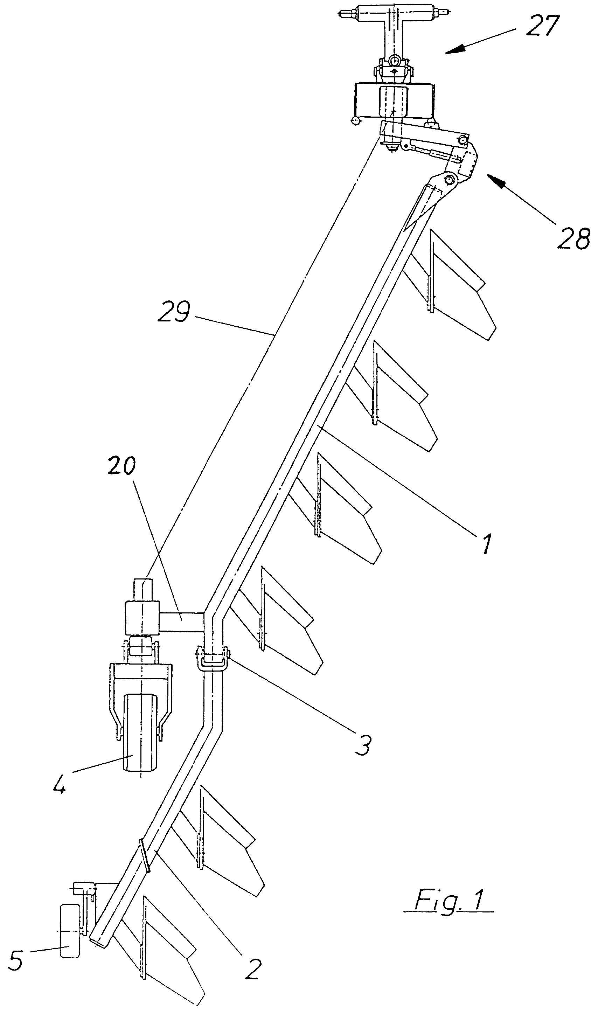

Die Fig. 1 zeigt in der Draufsicht in vereinfachter Weise die Ausgestaltung eines erfindungsgemäß weiterzubildenden Drehpfluges. Dieser umfaßt ein Vordergestell 27 sowie eine Schnittbreiteneinstellung 28, an welchen ein vorderer Pflugrahmen 1 sowie Stabilisator 29 gelagert sind. Die Abstützung des vorderen Pflugrahmens erfolgt über ein Hinterrad 4. Insofern entspricht der Aufbau dieses Drehpfluges den bisher bekannten Ausgestaltungsformen, so daß auf weitere Erläuterungen verzichtet und auf den diesbezüglichen Stand der Technik verwiesen werden kann.

Am hinteren Ende des vorderen Pflugrahmens 1 ist an einem horizontalen Gelenk 3 ein hinterer Pflugrahmen 2 gelagert, dessen freies Ende mit einem Tiefen-Führungsrad 5 versehen ist.

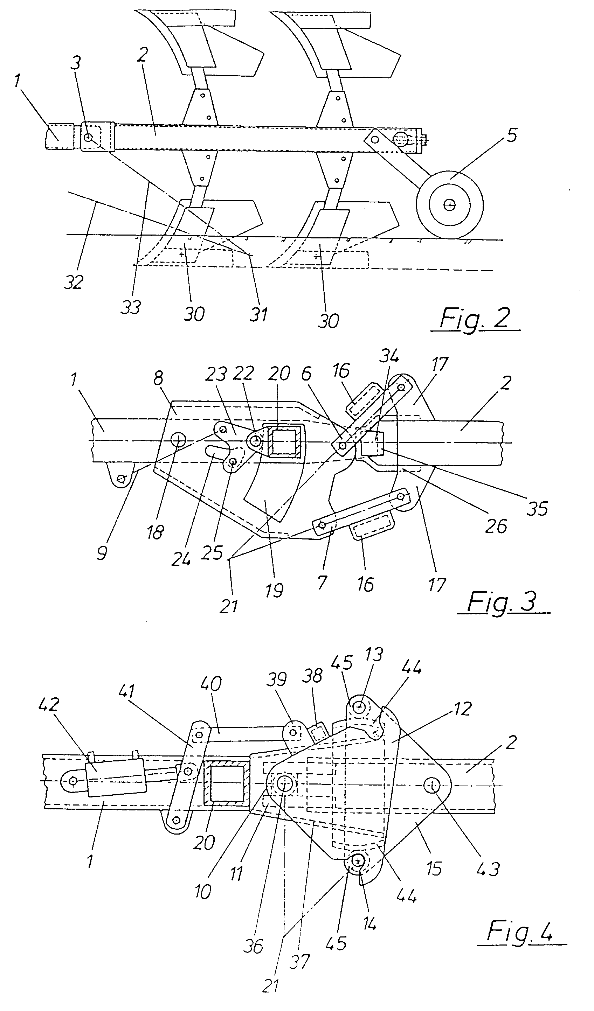

Die Fig. 2 zeigt den hinteren Pflugrahmen 2 in Seitenansicht. Dabei ist insbesondere die Lage des horizontalen Gelenkes 3 erläutert. Die Kräfte der Pflugkörper 30 führen zu einem Eingriff der Kraft-Resultierenden an dem Punkt 31, wobei die Resultierende der Bodenkräfte die mit 32 gezeigte Orientierung haben kann. Es ist ersichtlich, daß sich, wie beim Stand der Technik, ein erheblicher Hebelarm ergibt. Nur wenn die Resultierende die mit 33 eingezeichnete Richtung aufweisen würde, wäre sichergestellt, daß der hintere Teil des Pfluges in ausreichender Weise im Boden gehalten werden kann.

Aus der Darstellung der Fig. 2 ergibt sich, daß erfindungsgemäß mehrere Lösungswege zur Verfügung stehen. Zum einen ist es möglich, das erforderliche Moment mit Hilfe einer äußeren Kraft, zum Beispiel mittels eines Hydraulikzylinders in Kombination mit elastischen Federelementen aufzubringen. Eine anderen Möglichkeit besteht darin, das Moment mit Hilfe des Gewichtes des Pfluges aufzubringen, eine dritte Möglichkeit ergibt sich durch die Aufbringung des Momentes mit Hilfe der Drehung des Pfluges. Die Fig. 2 zeigt jedoch, daß die tatsächliche Kraftresultierende sehr tief liegt, d. h. an einer Stelle, an der wegen der hier auftretenden Verstopfungsgefahr kein reelles Gelenk ausgebildet werden kann. Es wird darum vorgeschlagen, ein kinematisches matisches Getriebe zur Verbindung der beiden Pflugrahmen zu schaffen, wobei das Getriebe in der jeweiligen Arbeitsstellung einen tiefliegenden Pol aufweist.

Erfindungsgemäß kann es günstig sein, wenn das Gelenk 3 möglichst weit vorne angeordnet ist, besonders günstig ist es, wenn es in einem Bereich zwischen dem letzten Pflugschar des vorderen Pflugrahmens 1 und der Achse des Hinterrades 4 angeordnet wird.

Die Fig. 3 zeigt ein erstes Ausführungsbeispiel des erfindungsgemäßen Gelenkbereiches. Es wird hierbei ein Gelenkviereck verwendet, um den Drehpunkt oder Pol des Gelenkes zu realisieren. Das Gelenkviereck umfaßt zwei paarweise angeordnete obere Lenker 6 sowie zwei paarweise angeordnete untere Lenker 7, welche jeweils über eine Querstrebe 16 verbunden sind. Die rückwärtigen Enden der oberen und unteren Lenker 6 und 7 sind gelenkig an vertikalen Trägern 17 gelagert, welche an dem hinteren Pflugrahmen 2 befestigt sind. Die vorderen Enden der oberen und unteren Lenker 6 und 7 sind gelenkig an einem Schwenkelement 8 gelagert, welches an einem Lager 18 an dem vorderen Pflugrahmen 1 gelagert ist. Das Schwenkelement 8 ist mit einer Ausnehmung 19 versehen, welche fensterartig ausgebildet ist und in welcher ein Arm 20 geführt ist, welcher ein im einzelnen nicht dargestelltes Lager des Stabilisators 29 trägt.

Der obere und der untere Lenker 6, 7 bilden, wie in Fig. 3 dargestellt, einen Pol 21, welcher in vorteilhafter Weise sowohl tiefer als die Teile der Einrichtung als auch weit vorn liegt.

An dem Arm 20 ist eine Lagerstelle 22 für einen Winkelhebel 23 angeordnet, welcher über eine Antriebseinrichtung 9 (z. b. Hydraulikzylinder) verschwenkbar ist. Es ist lediglich die Mittellinie der Antriebseinrichtung 9 dargestellt, um die Übersichtlichkeit der Zeichnung zu erhalten. Das Schwenkelement 8 ist mit einer Kulisse 24 versehen, welche so ausgebildet ist, daß sich ein Zapfen 25 des Winkelhebels 23 darin abstützen kann und andererseits das Schwenkelement 8 beim Verschwenken des Winkelhebels 23 in die andere Arbeitsstellung umschwenken kann.

Zur Erhöhung der Stabilität ist das Schwenkelement so ausgebildet, daß es zwei zueinander parallele Platten umfaßt, welche im oberen und unteren Bereich verbunden sind. Es wird somit eine gehäuseartige Struktur gebildet.

Die Ausnehmung 19 begrenzt die Schwenkbarkeit des Schwenkelementes 8.

Um die Schwenkbarkeit des hinteren Pflugrahmens 2 gegenüber dem vorderen Pflugrahmen 1 zu begrenzen, ist am vorderen Ende des hinteren Rahmens 2 ein Bügel 26 befestigt. Dieser Bügel 26 wird überkreuz von einem Bügel 34 durchgriffen, welcher am hinteren Ende des vorderen Pflugrahmens 1 befestigt ist. Die Breite des Bügels 34 ist am Querschnitt 35 so breit, daß der Bügel in das entsprechend geformte hintere Ende des Bügels 26 hineinpaßt, wenn das Schwenkelement 8 und die Lenker 6 und 7 ihre Symmetrielage eingenommen haben. Wenn diese Symmetrielage erreicht ist, wird der hintere Pflugrahmen 2 gegenüber dem vorderen Pflugrahmen 1 festgehalten, da der Zapfen 25 des Winkelhebels 23 in den Schlitz der Kulisse 24 gewandert ist, wodurch die gesamte Anordnung von dem Hydraulikzylinder 9 gehalten wird.

Der Hydraulikzylinder 9 ist doppelt wirkend ausgebildet, so daß er zu dem oder den Zylindern des Drehwerks des Pfluges parallel geschaltet werden kann. Es ist auch möglich, den Zylinder in Reihe zu schalten, damit es beim Durchgang durch die Totpunktlage nicht zu einem Schlagen kommen kann. Diese Anordnung des Zylinders ist auch bei dem in Zusammenhang mit Fig. 4 beschriebenen Ausführungsbeispiel günstig.

Nachfolgend wird das Ausführungsbeispiel gemäß Fig. 4 beschrieben. Dieses Ausführungsbeispiel unterscheidet sich von dem Ausführungsbeispiel der Fig. 3 dadurch, daß eine Kulisse verwendet wird. Im einzelnen ist an dem vorderen Ende des hinteren Pflugrahmens 2 eine Gabel 11 ausgebildet, in welcher ein Kulissenstein 10 verschiebbar ist. Durch den Kulissenstein 10 greift ein Bolzen 36, welcher an einer trichterförmigen Tasche oder einem trichterförmigen Gehäuse 37 gelagert ist, welches an dem vorderen Pflugrahmen 1 befestigt ist.

Links und rechts des Gehäuses 37 ist jeweils ein plattenförmiges Schaltelement 12 angeordnet, welches über einen Querholm 38 verbunden ist. Über einen Ansatz 39 und Hebel 40 und 41 ist das Schaltelement 12 mit einem Hydraulikzylinder 42 verbunden.

An dem hinteren Pflugrahmen 2 ist an einem Lager 43 schwenkbar ein im wesentlichen dreieckiges Lagerelement 15 befestigt, welches einen oberen und unteren Lagerzapfen 13 und 14 aufweist.

Das trichterförmige Gehäuse 37 nimmt, wie in Fig. 4 gezeigt, das vordere Ende des hinteren Pflugrahmens 2 auf. Die Gabel 11 ist somit gegenüber dem Kulissenstein 10 verschiebbar, wobei das Schaltelement 12 ortsfest an dem vorderen Pflugrahmen 1 gehalten ist.

An dem Gehäuse 37 sind weiterhin Führungsbahnen 44 angebracht, auf welchen Rollen 45 ablaufen, die auf den Lagerzapfen 13, 14 gelagert sind. Die Führungsbahnen 44 lassen nur eine bedingte Verschwenkung des jeweils oberen Lagerzapfens 13 oder 14 zu. Die Führungsbahnen 44 bilden einen Kreisbogen um den jeweils anderen Lagerzapfen 13 bzw. 14.

Nachfolgend wird die Funktionsweise der Vorrichtung gemäß Fig. 4 beschrieben:
Der Lagerzapfen 14 wird von dem hakenförmigen Bereich des Schaltelementes 12 festgehalten, er kann sich somit weder vor noch zurück noch nach oben oder unten bewegen. Die Bewegung nach oben oder nach unten wird durch die Führungsbahnen 44 begrenzt, während die Bewegung vor und zurück durch den hakenartigen Bereich des Schaltelementes 12 verhindert wird. Wenn der hintere Pflugrahmen 2 aufwärts verschwenkt wird, kann die Rolle 45 des Lagerzapfens 13 nach vorne verschwenkt werden. Dabei verschiebt sich die Kulisse 11 relativ zu dem Kulissenstein 10, so daß somit ein Getriebe mit einem Lenker aus der Verbindung zwischen den Punkten 14 und 43 und einem Lenker durch die Kulisse und den Kulissenstein 10, 11 gebildet wird. Beides ergibt den Pol 21.

Anstelle der Verwendung der gezeigten Hydraulikzylinder 9 und 42 ist es auch möglich, die Bewegung zum Umschalten der Getriebe jeweils durch eine Koppelung mit der Drehung des Pflugrahmens um das Lager 20 des Hinterrades 4 zu ermöglichen, so daß beim Drehen des Pfluges automatisch eine Umschaltung der ideellen Lager erfolgt.

Die Erfindung ist nicht auf die gezeigten Ausführungsbeispiele beschränkt, vielmehr ergeben sich für den Fachmann im Rahmen der beanspruchten Erfindung vielfältige Abwandlungs- und Modifikationsmöglichkeiten.

## Patentansprüche

1. Aufsattel- oder Anhänge-Drehpflug mit einem vorderen (1) und einem hinteren (2), durch ein horizontales Gelenk (3) verbundenen Pflugrahmen, mit einer mindestens ein Rad (4) umfassenden Abstützvorrichtung, welche in der hinteren Hälfte des Drehpfluges angeordnet ist, und einer Tiefen-Führungseinrichtung für den hinteren Pflugrahmen (2), dadurch gekennzeichnet, daß das Gelenk (3) als ideelles Doppelgelenk ausgebildet ist, wobei durch eine Gelenkanordnung in der jeweiligen Arbeitsstellung des Drehpfluges ein unterhalb der Symmetrieebene des Pflugrahmens (1, 2) angeordneter Pol ausgebildet wird.

2. Drehpflug nach Anspruch 1, dadurch gekennzeichnet, daß die Gelenkanordnung zumindest in einer Zwischenlage beim Drehen des Drehpfluges symmetrisch zum Pflugrahmen (1, 2) ist und in der jeweiligen Arbeitsstellung zur Ausbildung des ideellen Gelenkes (3) verschwenkbar ist.

3. Drehpflug nach Anspruch 1 oder 2, dadurch gekennzeichnet, daß die Gelenkanordnung ein Lenkergetriebe umfaßt.

4. Drehpflug nach Anspruch 1 oder 2, dadurch gekennzeichnet, daß die Lenkeranordnung eine Kulissenführung umfaßt.

5. Drehpflug nach Anspruch 3, dadurch gekennzeichnet, daß das Lenkergetriebe ein Gelenkviereck mit jeweils zumindest einem oberen (6) und einem unteren (7) Lenker umfaßt, daß die Lenker (6, 7) am vorderen Endbereich des hinteren Pflugrahmens (2) und an einem Schwenkelement (8) gelagert sind, und daß das Schwenkelement (8) mittels einer Antriebseinrichtung (9) zwischen zwei Arbeitsstellungen verschwenkbar ist.

6. Drehpflug nach Anspruch 5, dadurch gekennzeichnet, daß das Schwenkelement (8) in den beiden Arbeitsstellungen und/oder einer mittleren Drehstellung fixierbar ist.

7. Drehpflug nach Anspruch 5 oder 6, gekennzeichnet durch Mittel zur Begrenzung des Schwenkwinkels zwischen dem vorderen Pflugrahmen (1) und dem hinteren Pflugrahmen (2).

8. Drehpflug nach Anspruch 4, dadurch gekennzeichnet, daß die Kulissenführung eine längs des Pfluges verschiebbare, den vorderen Pflugrahmen (1) und den hinteren Pflugrahmen (2) verbindende Kulisse (10, 11) umfaßt, sowie ein zwischen zwei Arbeitsstellungen umstellbares Schaltelement (12), welches wahlweise mit einem oberen (13) und einem unteren (14), an dem hinteren Pflugrahmen (2) oberhalb bzw. unterhalb der Symmetrieebene des Pflugrahmens (1, 2) angeordneten Lagerzapfen (13, 14) in Eingriff bringbar ist, wobei über ein Tragelement (15) der Lagerzapfen (13, 14) schwenkbar an dem hinteren Pflugrahmen (2) gelagert ist.

9. Drehpflug nach Anspruch 8, gekennzeichnet durch Mittel zur Begrenzung des Schwenkwinkels zwischen dem vorderen Pflugrahmen (1) und dem hinteren Pflugrahmen (2).

## Claims

1. A semi-mounted or trailed reversible plough having a front (1) and a rear (2) plough frame connected by a horizontal joint (3), having a supporting device comprising at least one wheel (4) and arranged in the rear half of the reversible plough, and having a depth guide arrangement for the rear plough frame (2), characterised in that the joint (3) is formed as a notional double joint, a pole, arranged below the plane of symmetry of the plough frame (1, 2), being formed by a joint arrangement in the respective operating position of the reversible plough.

2. A reversible plough according to claim 1, characterised in that the joint arrangement is symmetrical to the plough frame (1, 2), at least in an intermediate position on rotation of the reversible plough, and is tiltable in the respective operating position to form the notional joint (3).

3. A reversible plough according to claim 1 or 2, characterised in that the joint arrangement comprises a control-rod mechanism.

4. A reversible plough according to claim 1 or 2, characterised in that the control-rod arrangement comprises a link guide.

5. A reversible plough according to claim 3, characterised in that the control-rod mechanism comprises a four-bar linkage having at least one upper (6) and one lower (7) control rod, in that the control rods (6, 7) are mounted on the front end region of the rear plough frame (2) and on a pivot member (8), and in that the pivot member (8) is tiltable between two operating positions by means of a drive arrangement (9).

6. A reversible plough according to claim 5, characterised in that the pivot member (8) is fixable in the two operating positions and/or a central pivot position.

7. A reversible plough according to claim 5 or 6, characterised by means for limiting the pivot angle between the front plough frame (1) and the rear plough frame (2).

8. A reversible plough according to claim 4, characterised in that the link guide comprises a link (10, 11) displaceable along the plough and connecting the front plough frame (1) and the rear plough frame (2), and a shift member (12) shiftable between two operating positions and engageable with either an upper (13) or a lower (14) bearing journal (13, 14) arranged on the rear plough frame (2) respectively above and below the plane of symmetry of the plough frame (1, 2), the bearing journal (13, 14) being pivotably mounted on the rear plough frame (2) by a carrying member (15).

9. A reversible plough according to claim 8, characterised by means for limiting the pivot angle between the front plough frame (1) and the rear plough frame (2).

## Revendications

1. Charrue réversible semi-portée ou remorquée, comportant un bâti de charrue avant (1) et un bâti de charrue arrière (2), reliés par une articulation horizontale (3), comportant un dispositif d'appui qui comprend au moins une roue (4) et qui est disposé dans la moitié arrière de la charrue réversible, et comportant un dispositif de guidage en profondeur pour le bâti de charrue arrière (2),
caractérisée en ce que l'articulation (3) est réalisée pour former d'une double articulation idéale, étant entendu qu'un centre instantané de rotation, situé sous le plan de symétrie du bâti de charrue (1, 2), est réalisé par un dispositif à articulation, dans chaque position de travail concernée.

2. Charrue réversible suivant la revendication 1, caractérisée en ce que le dispositif à articulation est symétrique par rapport aux bâtis de charrue (1, 2), au moins dans une position intermédiaire lors de la rotation de la charrue réversible, et, dans chaque position de travail, peut pivoter en réalisant ainsi l'articulation idéale (3).

3. Charrue réversible suivant la revendication 1 ou la revendication 2, caractérisée en ce que le dispositif à articulation comporte un mécanisme à bras pivotant.

4. Charrue réversible suivant la revendication 1 ou la revendication 2, caractérisée en ce que le mécanisme à bras pivotant comporte un guidage par coulisseau.

5. Charrue réversible suivant la revendication 3, caractérisée en ce que le mécanisme à bras pivotant présente un quadrilatère articulé comportant chaque fois au moins un bras pivotant supérieur (6) et un bras pivotant inférieur (7), en ce que les bras pivotants (6, 7) sont montés sur la zone de l'extrémité avant du bâti de charrue arrière (2) et sur un organe pivotant (8), et en ce qu'on peut faire pivoter l'organe pivotant (8) entre deux positions de travail, au moyen d'un dispositif de commande (9).

6. Charrue réversible suivant la revendication 5, caractérisée en ce que l'organe pivotant (8) peut être bloqué dans les deux positions de travail et/ou dans une position de rotation moyenne.

7. Charrue réversible suivant la revendication 5 ou la revendication 6, caractérisée par un moyen de limitation de l'angle de pivotement entre le bâti de charrue avant (1) et le bâti de charrue arrière (2).

8. Charrue réversible suivant la revendication 4, caractérisée en ce que le guidage par coulisseau comporte un coulisseau (10, 11) reliant le bâti de charrue avant (1) et le bâti de charrue arrière (2) et pouvant coulisser le long de la charrue, ainsi qu'un organe de commutation (12) qui peut être inversé entre deux positions de travail et qui peut venir en prise, à volonté, avec un tourillon de palier, soit supérieur (13) soit inférieur (14), ces tourillons (13, 14) étant situés sur le bâti de charrue arrière (2), respectivement au-dessus et au-dessous du plan de symétrie du bâti de charrue (1, 2), étant entendu que le tourillon (13, 14) est monté pivotant sur le bâti de charrue arrière (2) par l'intermédiaire d'un organe support (15).

9. Charrue réversible suivant la revendication 8, caractérisée par un moyen de limitation de l'angle de pivotement entre le bâti de charrue avant (1) et le bâti de charrue arrière (2).
